# EUROPÄISCHE PATENTSCHRIFT

(11) **EP 2 459 424 B1**
(45) Veröffentlichungstag und Bekanntmachung des Hinweises auf die Patenterteilung: **11.09.2013**
(21) Anmeldenummer: 10732934.4
(22) Anmeldetag: 12.07.2010
(51) Int. Cl.: B60T 11/20

(54) **HAUPTZYLINDER INSBESONDERE FÜR EIN GEREGELTES KRAFTFAHRZEUGBREMSSYSTEM**
MASTER CYLINDER IN PARTICULAR FOR A CONTROLLED MOTOR VEHICLE BRAKE SYSTEM
MAÎTRE-CYLINDRE EN PARTICULIER POUR UN SYSTÈME DE FREINAGE À RÉGULATION D'UN VÉHICULE À MOTEUR

(30) Priorität: 31.07.2009 DE 102009035631
(43) Veröffentlichungstag der Anmeldung: 06.06.2012
(73) Patentinhaber: Continental Teves AG & Co. oHG, 60488 Frankfurt (DE)
(72) Erfinder: LOKE, Jörg, 65611 Brechen (DE); DROTT, Peter, 65936 Frankfurt (DE); TRAN, Thanh-Quyen, 60489 Frankfurt (DE); LEPTICH, Heiko, 65207 Wiesbaden (DE); KÖNIG, Harald, 61239 Ober-Mörlen (DE)
(86) Internationale Anmeldenummer: PCT/EP2010/059956
(87) Internationale Veröffentlichungsnummer: WO 2011/012431

(56) Entgegenhaltungen:
- DE-A1-102004 057 137
- GB-A- 1 204 739

## Beschreibung

Die Erfindung betrifft einen Hauptzylinder, insbesondere für ein geregeltes Kraftfahrzeugbremssystem, mit einem ersten und einem zweiten in einem Gehäuse verschiebbaren Kolben mit einer gefesselten Feder, wobei sich die Feder mit einem ersten Ende zumindest mittelbar an dem Kolben und mit einem zweiten Ende an einer gegenüber dem Kolben verschiebbaren Hülse abstützt, deren Bewegung gegenüber dem Kolben durch einen an dem Kolben vorgesehenen Zapfen und einer Anschlagscheibe begrenzt ist, wobei die Anschlagscheibe an einem freien Ende des Zapfens angeordnet ist.

Ein derartiger Hauptzylinder ist beispielsweise aus der DE 10 2004 057 137 A1 bzw. aus der GB 1 204 739 A bekannt. Als nachteilig bei dem bekannten Hauptzylinder wird angesehen, dass bei einem schnellen Lösen der Bremse die Hülse des ersten Kolbens schlagartig an die Anschlagscheibe anschlägt, da die gefesselte Feder den ersten Kolben entgegen der Betätigungsrichtung zurück in seine Ausgangslage drängt. Hierbei entstehen unerwünschte Anschlaggeräusche, die durch einen an den Hauptzylinder befestigten Bremskraftverstärker in einen Fahrgastraum des Fahrzeuges übertragen werden.

Der Erfindung liegt daher die Aufgabe zugrunde, einen in Hinblick auf die genannten Nachteile des bekannten Hauptzylinders verbesserten Hauptzylinder bereitzustellen.

Erfindungsgemäß wird die Aufgabe dadurch gelöst, dass die Anschlagscheibe des ersten Kolbens Mittel zur gedämpften Anlage der Hülse aufweist. Hierdurch können die störenden Anschlaggeräusche, die insbesondere beim schnellen Lösen der Bremse auftreten, effektiv vermieden werden.

Um die Montage der Anschlagscheibe zu vereinfachen, sind die Mittel vorzugsweise auf beiden Seiten der Anschlagscheibe vorgesehen. Es muss somit bei der Montage nicht darauf geachtet werden, of die Anschlagscheibe lagerichtig auf den Zapfen befestigt wird.

Gemäß einer vorteilhaften Ausführungsform der Erfindung weist die Anschlagscheibe auf beiden Seiten eine umlaufende Nut auf und die Mittel sind als elastische Ringelemente vorgesehen sind, die jeweils in der umlaufenden Nut angeordnet.

Vorzugsweise weist die Anschlagscheibe mehrere axial ausgerichtete Bohrungen auf, welche die Nuten auf beiden Seiten der Anschlagscheibe verbinden. Hierdurch sind die beiden Ringelemente miteinander verbunden und sind verliersicher auf der Anschlagscheibe befestigt.

Eine verbesserte Verankerung des Werkstoffes der Ringelemente kann dadurch erreicht werden, wenn die axial ausgerichteten Bohrungen ballig vorgesehen sind.

Ein definierter Hub des ersten Kolbens kann gemäß einer vorteilhaften Ausführung der Erfindung dadurch sichergestellt werden, indem die Ringelemente derart ausgestaltet sind, dass in einer unbetätigten Stellung des Hauptzylinders die Hülse mit einem Kragen direkt an der Anschlagscheibe anlegbar ist.

Hierzu weisen die Ringelemente vorteilhafterweise jeweils eine umlaufende Lippe und eine umlaufende Vertiefung auf, wobei die umlaufende Lippe vor der Anlage des Kragens über eine Seitenfläche der Anschlagscheibe vorsteht und bei Anlage des Kragens in die Vertiefung verdrängbar ist.

Vorzugsweise sind die Ringelemente auf die Anschlagscheibe aufvulkanisiert.

Die Stabilität der Anschlagscheibe kann auch bei Vorsehen der Mittel dadurch gewährleistet werden, indem die Anschlagscheibe als metallenes Feinstanzteil vorgesehen ist.

Weitere Merkmale, Vorteile und Anwendungsmöglichkeiten der Erfindung gehen aus den Unteransprüchen und der nachfolgenden Beschreibung eines Ausführungsbeispiels sowie anhand der Zeichnung hervor.

Es zeigt jeweils stark schematisiert:
- Figur 1: einen bekannten Hauptzylinder im Längsschnitt;
- Figur 2: eine Anschlagscheibe mit aufvulkanisierten Ringelementen eines erfindungsgemäßen Hauptzylinders in räumlicher Darstellung;
- Figur 3: die Anschlagscheibe gemäß Fig. 2 in räumlicher Darstellung und teilweise geschnitten und
- Figur 4: die Anschlagscheibe gemäß Fig. 2 ohne Ringelemente in räumlicher Darstellung und teilweise geschnitten.

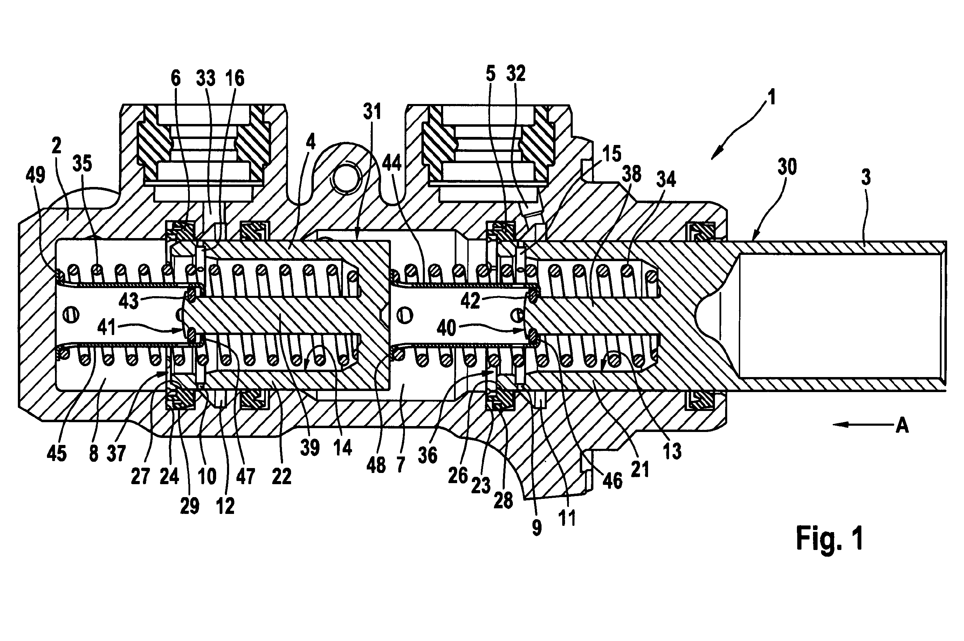

Fig. 1 zeigt im Längsschnitt einen bekannten Hauptzylinder 1, welcher beispielsweise in einem geregelten Bremssystem mit Antischlupfregelung (ASR) und/oder Elektronischem-Stabilitäts-Programm (ESP) Verwendung findet und in Plunger- und Tandembauweise ausgebildet ist.

Der Hauptzylinder 1 umfasst einen ersten und einen zweiten, in einem Gehäuse 2 verschiebbaren Kolben 3,4, wobei in einer Ringnut 23,24 des Gehäuses 2 ein kreisringförmiges Dichtelement 5,6 mit einer dynamisch beaufschlagten Innendichtlippe 26,27 sowie mit einer statisch beaufschlagten Außendichtlippe 28,29 vorgesehen ist. Die dynamisch beaufschlagte Innendichtlippe 26,27 liegt mit einer ersten Dichtfläche an dem Kolben 3,4 an und die statisch beaufschlagte Außendichtlippe 28,29 liegt mit einer zweiten Dichtfläche an einem Boden der Ringnut 23,24 an. Eine Außenseite 30,31 der Kolben 3,4 dient als Führungsfläche.

Ein erster und ein zweiter Druckraum 7,8 sind in einem, in Fig. 1 dargestellten, unbetätigten Zustand des Hauptzylinders 1 über einen Druckmittelkanal 32,33 und einen Nachlaufraum 11,12 im Gehäuse 2 sowie über als Querbohrungen ausgestaltete Steuerdurchlässe 9,10 in einer topfförmigen Wandung 21,22, die an einer Seite 36,37 des ersten und des zweiten Kolbens 3,4 vorgesehen ist, mit einem nicht dargestellten, drucklosen Druckmittelbehälter verbunden. Je nach Ausführung des Hauptzylinders 1 weist dieser zwischen vier und vierundzwanzig Querbohrungen 9,10 am Umfang des Kolbens 3,4 auf. Die Kolben 3,4 sind dabei mittels Druckfedern 34,35 vorgespannt.

Die Druckfeder 34,35 ist zumindest teilweise innerhalb der topfförmigen Wandung 21,22 angeordnet. Die Wandung 21,22 wird mittig von einem zentrischen Zapfen 38,39 durchragt, der vor seinem axialen Austritt aus der Wandung 21,22 endet. Dieses Ende 40,41 ist mit einem Anschlag 42,43 für eine Hülse 44,45 versehen, der mit einem Kragen 46,47 derart zusammenwirkt, dass die Hülse 44,45 relativ zu dem Zapfen 38,39 begrenzt teleskopierbar ist. Mit anderen Worten wird die Hülse 44,45 mit der Druckfeder 34,35 bei Betätigung in das Kolbeninnere gedrängt. Wie zu ersehen ist, handelt es sich bei dem Anschlag 42,43 vorzugsweise um eine, an den Zapfen 38,39 angenietete - insbesondere Taumelvernietete - ringförmige Anschlagscheibe. Das anderseitige Ende der Hülse 44,45 verfügt über den tellerartigen Kragen 48,49 zur Anlage der Druckfeder 34,35.

Zur Betätigung des Hauptzylinders 1 wird der erste Kolben 3 in Betätigungsrichtung A verschoben. Dabei wird die Bewegung des ersten Kolbens 3 über die Druckfeder 34 auf den zweiten Kolben 4 übertragen. Sobald sich die Querbohrungen 9,10 im Bereich der Dichtelemente 5,6 befinden, also die steuernde Bohrungs-Seitenkante überfahren ist, ist der sogenannte Leerweg des Hauptzylinders 1 durchfahren, da kein Druckmittel mehr von den Nachlaufräumen 11,12 durch die Querbohrungen 9,10 in die Druckräume 7,8 gelangen kann. Die Verbindung der Druckräume 7,8 mit dem Druckmittelbehälter ist unterbrochen und in den Druckräumen 7,8 wird Druck aufgebaut.

Die zwei hintereinander angeordneten Kolben 3,4 des Hauptzylinders 1 sind in ihrem Aufbau und ihrer Funktionsweise nahezu identisch, so dass nur der erste Kolben 3 weiter beschrieben wird.

Bei einem ASR- oder ESP-Eingriff kann es notwendig sein, bei unbetätigtem oder betätigtem Kolben 3 Druckmittel aus dem Druckmittelbehälter über den Druckraum 7 in Richtung Radbremsen nachzusaugen, was vorzugsweise mittels einer Pumpe erfolgt, deren Eingang wahlweise mit den Druckräumen 7,8 des Hauptzylinders 1 oder mit den Radbremsen verbindbar ist, um in Richtung Radbremsen oder in Richtung Hauptzylinder 1 zu fördern (Rückförderprinzip). Hierzu wird bei einem ASR-Eingriff in unbetätigtem Zustand des Hauptzylinders 1 das Druckmittel aus dem Druckmittelbehälter über den Druckmittelkanal 32, den Nachlaufraum 11, die Querbohrungen 9 und den Druckraum 7 nachgesaugt. Bei einem ESP-Eingriff in betätigtem Zustand des Hauptzylinders 1 erfolgt die Nachsaugung zusätzlich durch Überströmen der Außendichtlippe 28 des Dichtelementes 5, indem diese durch den Saugdruck in Richtung Innendichtlippe 26 umklappt und hierdurch die Dichtfläche der Außendichtlippe 28 nicht mehr am Boden der Ringnut 23 anliegt. Um der Pumpe bei einem ASR- oder ESP-Eingriff insbesondere in unbetätigter Stellung des Hauptzylinders 1 schnell genügend Druckmittel zur Verfügung zu stellen, ist es notwendig, den Drosselwiderstand der Querbohrungen 9 so gering wie möglich zu halten, wobei jedoch auch der Leerweg des Hauptzylinders 1 möglichst klein gehalten werden soll.

Wie aus Fig. 1 hervorgeht, münden die Querbohrungen 9,10 jeweils in eine Nut 15,16, welche auf einer Innenseite 13,14 der Kolben 3,4 vorgesehen ist und den Drosselwiderstand der Querbohrungen 9,10 reduziert.

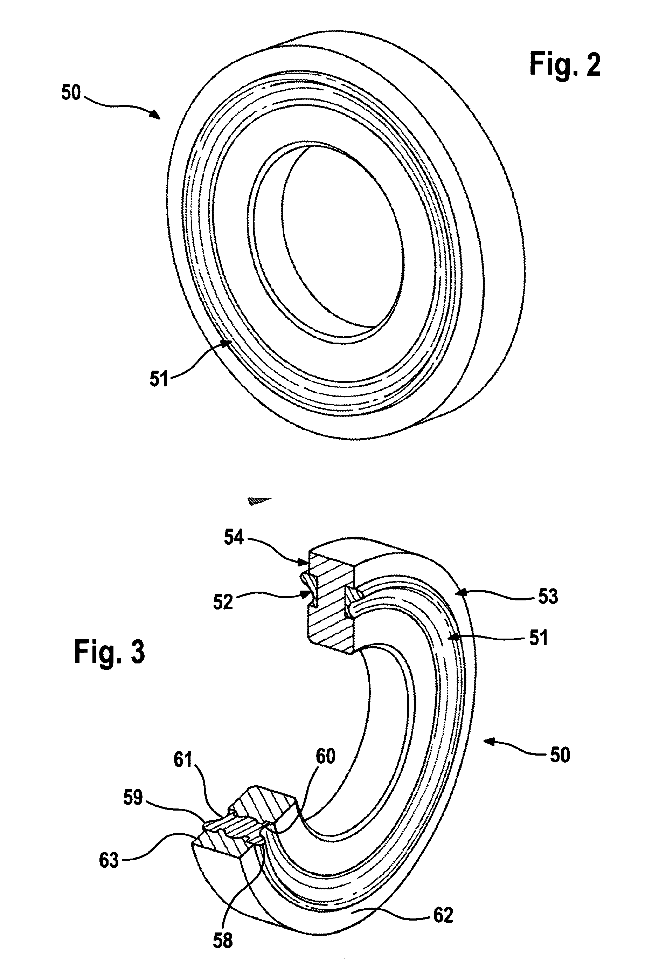

Fig. 2, 3 und 4 zeigen eine Anschlagscheibe eines erfindungsgemäßen Hauptzylinders 1 in räumlicher Darstellung und teilweise geschnitten. Der erfindungsgemäße Hauptzylinder 1 unterscheidet sich grundsätzlich nicht in Funktion und Aufbau zum bekannten Hauptzylinder gemäß Fig. 1, so dass auf eine wiederholte Beschreibung der Funktion und des Aufbaus verzichtet werden kann und im Nachfolgenden lediglich auf die erfindungsgemäßen Unterschiede eingegangen wird.

Um die bei dem bekannten Hauptzylinder als nachteilig angesehenen Anschlaggeräusche bei einem schnellen Lösen der Bremse effektiv zu vermeiden, weist eine Anschlagscheibe 50 des ersten Kolbens 3 des erfindungsgemäßen Hauptzylinders 1 Mittel zur gedämpften Anlage der Hülse 44 auf.

Insbesondere aus Fig. 3 ist zu entnehmen, dass diese Mittel als umlaufende Ringelemente 51,52 aus Gummi vorgesehen sind, welche auf beiden Seiten 53,54 der Anschlagscheibe 50 angeordnet sind.

Grundsätzlich wäre es ausreichend, nur auf der Seite ein dämpfendes Mittel vorzusehen, an welcher der Kragen 46 der Hülse 44 in der in Fig. 1 dargestellten Lösestellung zur Anlage kommt. Um jedoch die Montage der Anschlagscheibe 50 zu vereinfachen, sind die Ringelemente 51,52 auf beiden Seiten 53,54 der Anschlagscheibe 50 vorgesehen. Eine fehlerhafte Befestigung der Anschlagscheibe 50 auf dem Zapfen 38 kann damit ausgeschlossen werden.

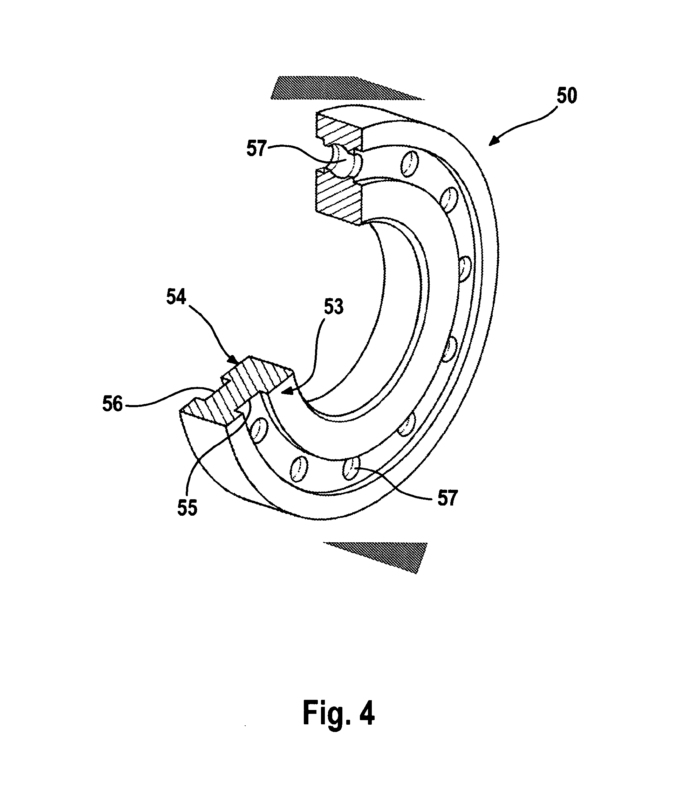

Fig. 4 zeigt die Anschlagscheibe 50 vor Anbringung der Ringelemente 51,52. Es ist ersichtlich, dass die Anschlagscheibe 50 auf beiden Seiten 53,54 eine umlaufende Nut 55,56 aufweist, wobei mehrere axial ausgerichtete Bohrungen 57 die Nuten 55,56 verbinden. Die Ringelemente 51,52 werden beispielsweise mittels Vulkanisieren in die Nuten 55,57 eingeformt. Beim Aufvulkanisieren des Gummiwerkstoffes füllen sich auch die Bohrungen 57, wodurch die Ringelemente 51,52 auf den beiden Seiten 53,54 miteinander verbunden und verliersicher auf der Anschlagscheibe 50 befestigt sind.

Zur verbesserten Verankerung des Gummiwerkstoffes können die Bohrungen 57, wie aus Fig. 4 ersichtlich, ballig vorgesehen sein.

Insbesondere Fig. 3 zeigt, dass die Ringelemente 51,52 derart ausgestaltet sind, dass in der unbetätigten Stellung (Lösestellung) des Hauptzylinders 1 die Hülse 44 mit ihrem Kragen 46 direkt an der Anschlagscheibe anlegbar ist, um einen definierter Hub des ersten Kolbens 3 sicherzustellen. Hierzu weisen die Ringelemente 51,52 jeweils eine umlaufende Lippe 58,59 und eine umlaufende Vertiefung 60,61 auf, wobei die umlaufende Lippe 58,59 vor der Anlage des Kragens 46 über eine Seitenfläche 62,63 der Anschlagscheibe 50 vorsteht und bei Anlage des Kragens 46 in die Vertiefung 60,61 verdrängbar ist. Die Vertiefungen 60,61 sind dabei derart bemessen, dass die Lippe 58,59 ohne Schwierigkeiten in diese verdrängbar ist.

Wenn die Anschlagscheibe 50 als metallenes Feinstanzteil vorgesehen dadurch ist, kann deren Stabilität auch bei der Nuten 55,56 und Bohrungen 57 gewährleistet werden.

Da, wie Fig. 1 zu entnehmen ist, die Hülse 45 des zweiten Kolbens 4 in der Lösestellung nicht zur Anlage an die Anschlagscheibe 43 gelangt, ist der Einsatz der beschriebenen Anschlagscheibe 50 auf den ersten Kolben 3 begrenzt.

### Bezugszeichenliste

- 1: Hauptzylinder
- 2: Gehäuse
- 3: Kolben
- 4: Kolben
- 5: Dichtelement
- 6: Dichtelement
- 7: Druckraum
- 8: Druckraum
- 9: Steuerdurchlass
- 10: Steuerdurchlass
- 11: Nachlaufraum
- 12: Nachlaufraum
- 13: Innenseite
- 14: Innenseite
- 15: Innennut
- 16: Innennut
- 17: Grundkörper
- 18: Steuerelement
- 19: Außenseite
- 21: Wandung
- 22: Wandung
- 23: Ringnut
- 24: Ringnut
- 26: Innendichtlippe
- 27: Innendichtlippe
- 28: Außendichtlippe
- 29: Außendichtlippe
- 30: Außenseite
- 31: Außenseite
- 32: Druckmittelkanal
- 33: Druckmittelkanal
- 34: Druckfeder
- 35: Druckfeder
- 36: Seite
- 37: Seite
- 38: Zapfen
- 39: Zapfen
- 40: Ende
- 41: Ende
- 42: Anschlag
- 43: Anschlag
- 44: Hülse
- 45: Hülse
- 46: Kragen
- 47: Kragen
- 48: Kragen
- 49: Kragen
- 50: Anschlagscheibe
- 51: Ringelement
- 52: Ringelement
- 53: Seite
- 54: Seite
- 55: Nut
- 56: Nut
- 57: Bohrung
- 58: Lippe
- 59: Lippe
- 60: Vertiefung
- 61: Vertiefung
- 62: Seitenfläche
- 63: Seitenfläche
- A: Betätigungsrichtung

## Patentansprüche

1. Hauptzylinder (1), insbesondere für ein geregeltes Kraftfahrzeugbremssystem, mit einem ersten und einem zweiten in einem Gehäuse (2) verschiebbaren Kolben (3,4) mit einer gefesselten Feder (34,35), wobei sich die Feder (34,35) mit einem ersten Ende zumindest mittelbar an dem Kolben (3,4) und mit einem zweiten Ende an einer gegenüber dem Kolben (3,4) verschiebbaren Hülse (44,45) abstützt, deren Bewegung gegenüber dem Kolben (3,4) durch einen an dem Kolben (3,4) vorgesehenen Zapfen (38,39) und einer Anschlagscheibe (43,50) begrenzt ist, wobei die Anschlagscheibe (43,50) an einem freien Ende des Zapfens (38,39) angeordnet ist, **dadurch gekennzeichnet, dass** die Anschlagscheibe (50) des ersten Kolbens (3) Mittel zur gedämpften Anlage der Hülse (44) aufweist.

2. Hauptzylinder (1) nach Anspruch 1, **dadurch gekennzeichnet, dass** die Mittel auf beiden Seiten (53,54) der Anschlagscheibe (50) vorgesehen sind.

3. Hauptzylinder (1) nach Anspruch 2, **dadurch gekennzeichnet, dass** die Anschlagscheibe (50) auf beiden Seiten (53,54) eine umlaufende Nut (55,56) aufweist und die Mittel als elastische Ringelemente (51,52) vorgesehen sind, die jeweils in der umlaufenden Nut (55,56) angeordnet sind.

4. Hauptzylinder (1) nach Anspruch 3, **dadurch gekennzeichnet, dass** die Anschlagscheibe (50) mehrere axial ausgerichtete Bohrungen (57) aufweist, welche die Nuten (55,56) auf beiden Seiten (53,54) der Anschlagscheibe (50) verbinden.

5. Hauptzylinder (1) nach Anspruch 4, **dadurch gekennzeichnet, dass** axial ausgerichteten Bohrungen (57) ballig vorgesehen sind.

6. Hauptzylinder (1) nach Anspruch 5, **dadurch gekennzeichnet, dass** die Ringelemente (51,52) derart ausgestaltet sind, dass in einer unbetätigten Stellung des Hauptzylinders (1) die Hülse (44) mit einem Kragen (46) direkt an der Anschlagscheibe (50) anlegbar ist.

7. Hauptzylinder (1) nach Anspruch 6, **dadurch gekennzeichnet, dass** die Ringelemente (51,52) jeweils eine umlaufende Lippe (58,59) und eine umlaufende Vertiefung (60,61) aufweisen, wobei die umlaufende Lippe (58,59) vor der Anlage des Kragens (46) über eine Seitenfläche (62,63) der Anschlagscheibe (50) vorsteht und bei Anlage des Kragens (46) in die Vertiefung (60,61) verdrängbar ist.

8. Hauptzylinder (1) nach einem der Ansprüche 3 bis 7, **dadurch gekennzeichnet, dass** die Ringelemente (51,52) auf die Anschlagscheibe (50) aufvulkanisiert sind.

9. Hauptzylinder (1) nach einem der vorangegangenen Ansprüche, **dadurch gekennzeichnet, dass** die Anschlagscheibe (50) als metallenes Feinstanzteil vorgesehen ist.

## Claims

1. Master cylinder (1), in particular for a controlled motor vehicle brake system, comprising a first and a second piston (3, 4) which is displaceable in a housing (2) and has a captive spring (34, 35), a first end of the spring (34, 35) bearing at least indirectly against the piston (3, 4) and a second end thereof against a sleeve (44, 45) which is displaceable with respect to the piston (3, 4) and the movement of which with respect to the piston (3, 4) is limited by a pin (38, 39) provided on the piston (3, 4) and by a stop washer (43, 50), the stop washer (43, 50) being arranged on a free end of the pin (38, 39), **characterized in that** the stop washer (50) of the first piston (3) has means for the damped abutment of the sleeve (44).

2. Master cylinder (1) according to Claim 1, **characterized in that** the means are provided on both sides (53, 54) of the stop washer (50).

3. Master cylinder (1) according to Claim 2, **characterized in that** the stop washer (50) has on both sides (53, 54) a peripheral groove (55, 56) and the means are provided as elastic annular elements (51, 52) which are arranged in the respective peripheral grooves (55, 56).

4. Master cylinder (1) according to Claim 3, **characterized in that** the stop washer (50) has a plurality of axially oriented bores (57) which connect the grooves (55, 56) on both sides (53, 54) of the stop washer (50).

5. Master cylinder (1) according to Claim 4, **characterized in that** the axially oriented bores (57) have a crowned configuration.

6. Master cylinder (1) according to Claim 5, **characterized in that** the annular elements (51, 52) are configured in such a way that, in an unactuated position of the master cylinder (1), a collar (46) of the sleeve (44) can rest directly against the stop washer (50).

7. Master cylinder (1) according to Claim 6, **characterized in that** the annular elements (51, 52) each have a respective peripheral lip (58, 59) and a peripheral recess (60, 61), the peripheral lip (58, 59) projecting beyond a side face (62, 63) of the stop washer (50) prior to the abutment of the collar (46) and being displaceable into the recess (60, 61) upon abutment of the collar (46).

8. Master cylinder (1) according to any one of Claims 3 to 7, **characterized in that** the annular elements (51, 52) are vulcanized onto the stop washer (50).

9. Master cylinder (1) according to any one of the preceding claims, **characterized in that** the stop washer (50) is provided as a precision metal stamping.

## Revendications

1. Maître-cylindre (1), en particulier pour un système de frein de véhicule automobile régulé, comprenant un premier et un deuxième piston (3, 4) déplaçables dans un boîtier (2), comprenant un ressort attaché (34, 35), les ressorts (34, 35) s'appuyant par une première extrémité au moins de manière indirecte contre le piston (3, 4) et par une deuxième extrémité contre un manchon (44, 45) coulissant par rapport au piston (3, 4), dont le mouvement par rapport au piston (3, 4) est limité par un tourillon (38, 39) prévu sur le piston (3, 4) et par une rondelle de butée (43, 50), la rondelle de butée (43, 50) étant disposée à une extrémité libre du tourillon (38, 39), **caractérisé en ce que** la rondelle de butée (50) du premier piston (3) présente des moyens pour l'appui amorti du manchon (44).

2. Maître-cylindre (1) selon la revendication 1, **caractérisé en ce que** les moyens sont prévus des deux côtés (53, 54) de la rondelle de butée (50).

3. Maître-cylindre (1) selon la revendication 2, **caractérisé en ce que** la rondelle de butée (50) présente sur les deux côtés (53, 54) une rainure périphérique (55, 56) et les moyens sont prévus sous forme d'éléments annulaires élastiques (51, 52) qui sont chacun disposés dans la rainure périphérique (55, 56).

4. Maître-cylindre (1) selon la revendication 3, **caractérisé en ce que** la rondelle de butée (50) présente plusieurs alésages (57) orientés axialement, lesquels relient les rainures (55, 56) des deux côtés (53, 54) de la rondelle de butée (50).

5. Maître-cylindre (1) selon la revendication 4, **caractérisé en ce que** les alésages orientés axialement (57) sont prévus sous forme bombée.

6. Maître-cylindre (1) selon la revendication 5, **caractérisé en ce que** les éléments annulaires (51, 52) sont configurés de telle sorte que dans une position non actionnée du maître-cylindre (1), le manchon (44) puisse être appliqué directement contre la rondelle de butée (50) par le biais d'un collet (46).

7. Maître-cylindre (1) selon la revendication 6, **caractérisé en ce que** les éléments annulaires (51, 52) présentent à chaque fois une lèvre périphérique (58, 59) et un renfoncement périphérique (60, 61), la lèvre périphérique (58, 59) faisant saillie depuis l'appui du collet (46) par le biais d'une surface latérale (62, 63) de la rondelle de butée (50) et lors de l'appui du collet (46), pouvant être poussée dans le renfoncement (60, 61).

8. Maître-cylindre (1) selon l'une quelconque des revendications 3 à 7, **caractérisé en ce que** les éléments annulaires (51, 52) sont vulcanisés sur la rondelle de butée (50).

9. Maître-cylindre (1) selon l'une quelconque des revendications précédentes, **caractérisé en ce que** la rondelle de butée (50) est prévue sous forme de pièce découpée de précision en métal.
